# EUROPEAN PATENT APPLICATION

(11) **EP 1 995 282 A1**
(43) Date of publication of application: **26.11.2008**
(21) Application number: 07738209.1
(22) Date of filing: 09.03.2007
(51) Int. Cl.: C08L 101/00, C08K 7/28, C08L 33/04, C09J 7/02, C09J 11/04, C09J 133/00

(54) **MICROPARTICLE-CONTAINING VISCOELASTIC LAYER, AND PRESSURE-SENSITIVE ADHESIVE TAPE OR SHEET**

(30) Priority: 10.03.2006 JP 2006065528
(71) Applicant: NITTO DENKO CORPORATION, Ibaraki-shi, Osaka 567-8680 (JP)
(72) Inventor: MAEDA, Kazuhisa c/o Nitto Denko Corp., Osaka 567-86/80 (JP)
(74) Representative: Grünecker, Kinkeldey, Stockmair & Schwanhäusser Anwaltssozietät
(86) International application number: PCT/JP2007/054724
(87) International publication number: WO 2007/105654

(57) **Abstract**

The present invention relates to a microparticle-containing viscoelastic layer containing microparticles, the microparticles having a 90% particle diameter of 30 µm or less. A layer of the microparticle-containing viscoelastic composition of the invention is not deteriorated in adhesion strength at ordinary temperature and shear strength and excellent in adhesion strength at high temperatures. In particular, the microparticles are preferably hollow inorganic microparticles and hollow glass balloon are preferably used as the hollow inorganic microparticles. The layer of the microparticle-containing viscoelastic composition of the invention is used as a pressure-sensitive adhesive layer or a substrate, or is used as a pressure-sensitive adhesive tape or sheet having the pressure-sensitive adhesive layer or as a pressure-sensitive adhesive tape or sheet having the substrate.

## Description

### TECHNICAL FIELD

The present invention relates to a microparticle-containing viscoelastic layer containing microparticles. More specifically, it relates to a microparticle-containing viscoelastic layer capable of being utilized as a pressure-sensitive adhesive layer or substrate containing microparticles as well as a pressure-sensitive adhesive tape or sheet using the microparticle-containing viscoelastic layer.

### BACKGROUND ART

Hitherto, a pressure-sensitive adhesive tape or sheet having a pressure-sensitive adhesive layer containing microparticles has been used in application fields where adhesion strength at ordinary temperature and shear strength are required, e.g., bonding of members in various fields of automobiles, machinery parts, electric appliances, building materials, and the like. The pressure-sensitive adhesive tape or sheet having a pressure-sensitive adhesive layer containing microparticles which is used in such application fields has a thickness of several hundred micron meters or 1 mm or more in some cases and such a pressure-sensitive adhesive tape or sheet is particularly produced by curing a pressure-sensitive adhesive composition containing microparticles and a (meth)acrylic acid alkyl ester as a main monomer ingredient with an ultraviolet ray.

As such a pressure-sensitive adhesive tape or sheet, from the viewpoint of reactivity at the reaction with the ultraviolet ray, there has been proposed one in which hollow microparticles having a diameter of 20 to 150 µm (average particle diameter of 55 µm), particularly hollow glass balloons are dispersed over the whole of a pressure-sensitive adhesive layer (see Patent Document 1). However, since adhesiveness between the hollow glass balloon and the polymer in the pressure-sensitive adhesive layer is high, it lacks stress distributing property against deformation of the pressure-sensitive adhesive tape and is inferior in adhesion strength. For the purpose of decreasing the adhesiveness between the glass microbubble and the polymer in the pressure-sensitive adhesive layer, a pressure-sensitive adhesive tape containing a fluorine-based surfactant or a silicon-based surfactant added therein has been proposed (see Patent Document 2), in which migration of the microparticles in the pressure-sensitive adhesive layer is facilitated at its attachment through surface treatment of the non-adhesive microparticles. However, since the microparticles are buried in the adhesive layer and thus convex parts cannot be formed, a sufficient adhesiveness is not obtained by mere addition of the fluorine-based surfactant or silicon-based surfactant. In addition, as pressure-sensitive adhesive tapes using a microparticle-containing viscoelastic layer containing microparticles, there are known pressure-sensitive adhesive tapes filled with glass microbubbles (see Patent Documents 3, 4, 5, and 6), a glass microsphere to which coating is applied (see Patent Document 7), foamed pressure-sensitive adhesive tapes (see Patent Documents 8 and 9), an cell-containing pressure sensitive adhesive agent (see Patent Document 10), and the like. However, there has not been known any adhesive tape which satisfies not only adhesion strength at ordinary temperature and shear strength but also adhesive force at high temperature. Patent Document 1: JP-B-57-17030
Patent Document 2: JP-A-7-48549
Patent Document 3: JP-B-03-053345
Patent Document 4: JP-B-06-13679
Patent Document 5: JP-A-2003-41232
Patent Document 6: JP-A-01-224243
Patent Document 7: Japanese Patent No. 2515312
Patent Document 8: JP-A-01-217092
Patent Document 9: JP-A-02-248483
Patent Document 10: JP-A-63-089582

### DISCLOSURE OF THE INVENTION

An object of the invention is to provide a microparticle-containing viscoelastic layer excellent in adhesion strength at high temperature without deterioration in adhesion strength at ordinary temperature and shear strength. Moreover, another object of the invention is to provide a pressure-sensitive adhesive tape or sheet excellent in adhesion strength at high temperature without deterioration in adhesion strength at ordinary temperature and shear strength, which uses the above-mentioned microparticle-containing viscoelastic layer as a pressure-sensitive adhesive layer or a substrate.

As a result of extensive studies for attaining the above objects, the present inventors have found that it is possible to form a microparticle-containing viscoelastic layer excellent in adhesion strength at high temperature without deterioration in adhesion strength at ordinary temperature and shear strength by using microparticles having a 90% particle diameter of 30 µm or less. Thus, they have accomplished the invention.

Namely, the invention relates to the following (1) to (13).
(1) A microparticle-containing viscoelastic layer containing microparticles, said microparticles having a 90% particle diameter of 30 µm or less.
(2) The microparticle-containing viscoelastic layer according to (1), in which the microparticles have an average particle diameter of 20 µm or less.
(3) The microparticle-containing viscoelastic layer according to (1) or (2), in which the microparticles are hollow inorganic microparticles.
(4) The microparticle-containing viscoelastic layer according to (3), in which the hollow inorganic microparticles are hollow glass balloons.
(5) The microparticle-containing viscoelastic layer according to any one of (1) to (4), in which the microparticles have a density of 0.1 to 1.8 g/cm³.
(6) The microparticle-containing viscoelastic layer according to any one of (1) to (5), which contains 5 to 50% by volume of the microparticles based on the total volume of the microparticle-containing viscoelastic layer.
(7) The microparticle-containing viscoelastic layer according to any one of (1) to (6), which contains 5 to 40% by volume of cells based on the total volume of the microparticle-containing viscoelastic layer.
(8) The microparticle-containing viscoelastic layer according to any one of (1) to (7), which contains, as a base polymer, an acrylic polymer containing an alkyl (meth)acrylate as a main monomer component.
(9) The microparticle-containing viscoelastic layer according to any one of (1) to (8), which is obtained by curing a microparticle-containing viscoelastic composition containing at least microparticles and a monomer with an active energy ray.
(10) The microparticle-containing viscoelastic layer according to any one of (1) to (9), which is usable as a pressure-sensitive adhesive layer.
(11) The microparticle-containing viscoelastic layer according to any one of (1) to (9), which is usable as a substrate.
(12) A pressure-sensitive adhesive tape or sheet including the microparticle-containing viscoelastic layer according to (10) as a pressure-sensitive adhesive layer.
(13) A pressure-sensitive adhesive tape or sheet including the microparticle-containing viscoelastic layer according to (11) as a substrate, and a pressure-sensitive adhesive layer provided on at least one surface of the substrate.

According to the microparticle-containing viscoelastic layer containing microparticles of the invention, it is possible to form a pressure-sensitive adhesive layer or substrate in a pressure-sensitive adhesive tape or sheet excellent in adhesion strength at high temperature without deterioration in adhesion strength at ordinary temperature and shear strength. Moreover, the pressure-sensitive adhesive tape or sheet produced by using the above-mentioned microparticle-containing viscoelastic layer can exhibit an excellent adhesion strength at high temperature without deterioration in adhesion strength at ordinary temperature and shear strength.

### BRIEF DESCRIPTION OF THE DRAWINGS

Fig. 1 is a schematic cross-sectional view partially illustrating examples of the pressure-sensitive adhesive tape or sheet of the invention.
Fig. 2 is a schematic cross-sectional view partially illustrating examples of the pressure-sensitive adhesive tape or sheet of the invention.

### Description of Reference Numerals and Signs

1 pressure-sensitive adhesive tape or sheet having microparticle-containing pressure-sensitive adhesive layer
11 pressure-sensitive adhesive tape or sheet having microparticle-containing pressure-sensitive adhesive layer
12 pressure-sensitive adhesive tape or sheet having microparticle-containing pressure-sensitive adhesive layer
13 pressure-sensitive adhesive tape or sheet having microparticle-containing pressure-sensitive adhesive layer
14 pressure-sensitive adhesive tape or sheet having microparticle-containing substrate
15 pressure-sensitive adhesive tape or sheet having microparticle-containing substrate
2 microparticle-containing pressure-sensitive adhesive layer
3 substrate (microparticle-non-containing substrate)
4 pressure-sensitive adhesive layer (microparticle-non-containing pressure-sensitive adhesive layer)
5 microparticle-containing substrate
6 pressure-sensitive adhesive layer

### BEST MODE FOR CARRYING OUT THE INVENTION

The invention relates to a pressure-sensitive adhesive layer or substrate utilizing a microparticle-containing viscoelastic layer in which the microparticles have a 90% particle diameter of 30 µm or less as well as a pressure-sensitive adhesive tape or sheet using the microparticle-containing viscoelastic layer.

The microparticle-containing viscoelastic layer of the invention can be formed from a microparticle-containing viscoelastic composition including at least microparticles having a 90% particle diameter of 30 µm or less and a base polymer. Particularly, the layer is preferably formed by curing the microparticle-containing viscoelastic composition with an active energy ray. In the pressure-sensitive adhesive composition of the invention, cells and a surfactant including a fluorine-based surfactant can be also employed.

Microparticles having 90% particle size of 30 µm or less

In the invention, examples of the microparticles having a 90% particle size of 30 µm or less include particles of metal such as copper, nickel, aluminum, chromium, iron, and stainless steel, metal oxide particles thereof; particles of carbides such as silicon carbide, boron carbide, and nitrogen carbide, particles of nitrides such as aluminum nitride, silicon nitride, and boron nitride; particles of ceramics represented by oxides such as alumina and zirconium oxide; inorganic microparticles such as calcium carbide, aluminum hydroxide, glass, and silica; particles of natural materials such as volcanic sirasu (volcanic ash) and sand; and particles of polymers such as polystyrene, polymethyl methacrylate, phenol resins, benzoguanamine resins, urea resins, silicone resins, Nylon, polyesters, polyurethanes, polyethylene, polypropylene, polyamides, and polyimides. Moreover, examples of hollow inorganic microparticles include hollow balloons made of glass, such as a hollow glass balloon; hollow balloons made of metal compounds, such as a hollow alumina balloon; and hollow balloons made of porcelain such as a hollow ceramic balloon. Moreover, examples of hollow organic particles include hollow balloons made of resins, such as a hollow acrylic balloon and a hollow vinylidene chloride balloon.

Of these microparticles, from the viewpoints of efficiency of polymerization using an ultraviolet-ray reaction and weight, hollow inorganic microparticles are preferably used, and furthermore, it becomes possible to improve adhesive force at high temperature without deterioration in other properties such as shear force and retentive force by the use of hollow glass balloons and thus the case is preferred.

The microparticles having a 90% particle size of 30 µm or less can be obtained by screening microparticles having a 90% particle size of 30 µm or less from commercially available microparticles by means of a classifying machine or a sieve but are not particularly limited thereto.

For example, as the hollow glass balloons, there can be used trade name "Glass Microballoon" (manufactured by Fuji Silicia), trade names "CEL-STAR Z-25", "CEL-STAR Z-27", "CEL-STAR CZ-31T", "CEL-STAR Z-36", "CEL-STAR Z-39", "CEL-STAR T-36", "CEL-STAR SX-39", "CEL-STAR PZ-6000" (all manufactured by Tokai Kogyo Co., Ltd.), trade name "Silacs Fine Balloon" (manufactured by Fine Balloon Private Limited Company), and the like.

For example, there can be used trade name "Turbo Classifier" (manufactured by Nisshin Engineering Co., Ltd.) or trade name "Elbo Jet classifier" (manufactured by Matsubo Co., Ltd.) as the classifying machine, and trade name "Turbo Screener" (manufactured by Matsubo Co., Ltd.) as the sieve.

Moreover, as solid-core glass balloons, there can be used trade name "Sun Sphere" (manufactured by Asahi Glass Co., Ltd.), trade name "Micro Glass Beads EMB-20" (Potters Ballotini Co., Ltd.), and trade name "Glass Beads EGB-210" (Potters Ballotini Co., Ltd.).

In the invention, 90% particle diameter means a particle diameter at which a cumulative curve reaches 90% from a small particle diameter when the cumulative curve is determined by taking the total particle diameter of the group of the microparticles as 100% in the particle size distribution of the obtained microparticles.

By the use of microparticles having a 90% particle diameter of 30 µm or less, it becomes possible to improve adhesive force at high temperature without deterioration in other properties such as shear force and retentive force. The 90% particle diameter of the microparticles is suitably 30 µm or less, and microparticles having the diameter ranging preferably 25 µm or less, more preferably 20 µm or less are satisfactory. Moreover, an average diameter is 20 µm or less, preferably 15 µm or less, and microparticles having a particle diameter ranges more preferably 2 to 15 µm, further preferably 2 to 12 µm. The reasons for the preference are not clear but are surmised as follows: specific surface area increases with the decrease in particle diameter and adhesiveness becomes excellent with the increase of contact area with the base polymer as well as cohesive force at the interface with the whole pressure-sensitive adhesive layer and an adherend is enhanced by the dispersion of the microparticles in the base polymer. Accordingly, by the use of the pressure-sensitive adhesive layer obtained by adding microparticles having a 90% particle diameter of more than 30 µm, the adhesive force at high temperature cannot be enhanced without deterioration in other properties such as shear force and retentive force.

The 90% particle diameter and average particle diameter of the microparticles can be measured using a laser light-scattering type particle size-measuring apparatus. Specifically, a particle size-measuring apparatus (SALD-2200 manufactured by Shimadzu Corporation) can be employed.

The density of the microparticles is not particularly limited and, for example, can be selected from the range of 0.1 to 1.8 g/cm³. More preferably, it can be selected from the range of 0.2 to 1.5 g/cm³. When the density of the microparticles is smaller than 0.1 g/cm³, floating thereof increases at the mixing of the microparticles into a microparticle-containing viscoelastic composition and thus there occurs a case where a homogeneous dispersion is difficult to achieve. Moreover, the glass is weak in strength and is easily broken. On the other hand, when the density is 1.8 g/cm³ or larger, the transmittance of the ultraviolet ray decreases and there is a possibility that the efficiency of the ultraviolet reaction decreases. Moreover, the formed pressure-sensitive adhesive film or sheet becomes heavy and workability becomes worse.

The amount of the microparticles to be used is not particularly limited and, for example, can be selected from the range of 5 to 50% by volume, preferably 15 to 40% by volume based on the total volume of the viscoelastic layer formed of the microparticle-containing viscoelastic composition. When the amount of the microparticles is less than 5% by volume based on the total volume of the viscoelastic layer formed of the microparticle-containing viscoelastic composition, the effect of adding microparticles is small. On the other hand, when the amount of the microparticles is more than 50% by volume, pressure-sensitive adhesive force by the pressure-sensitive adhesive layer composed of the microparticle-containing viscoelastic composition decreases in some cases.

### Base Polymer

The base polymer in the microparticle-containing viscoelastic layer is not particularly limited but, in the case where the microparticle-containing viscoelastic layer is a pressure-sensitive adhesive layer (microparticle-containing pressure-sensitive adhesive layer), for example, it is optionally selected from base polymers (pressure-sensitive components) in known pressure-sensitive adhesives (adhesives) (e.g., acrylic pressure-sensitive adhesives, rubbery pressure-sensitive adhesives, vinyl alkyl ether-based pressure-sensitive adhesives, silicon-based pressure-sensitive adhesives, polyester-based pressure-sensitive adhesives, polyamide-based pressure-sensitive adhesives, urethane-based pressure-sensitive adhesives, fluorine-based pressure-sensitive adhesives, epoxy-based pressure-sensitive adhesives, and the like). Namely, the microparticle-containing pressure-sensitive adhesive layer in which the microparticle-containing viscoelastic layer of the invention is used may be a pressure-sensitive adhesive layer in which a conventional pressure-sensitive adhesive such as an acrylic pressure-sensitive adhesive, a rubbery pressure-sensitive adhesive, a vinyl alkyl ether-based pressure-sensitive adhesive, a silicon-based pressure-sensitive adhesive, a polyester-based pressure-sensitive adhesive, a polyamide-based pressure-sensitive adhesive, a urethane-based pressure-sensitive adhesive, a fluorine-based pressure-sensitive adhesive, or an epoxy-based pressure-sensitive adhesives is used.

On the other hand, in the case where the microparticle-containing viscoelastic layer is a substrate containing microparticles, the base polymer can be suitably selected from the same polymers as the base polymers in the above-mentioned microparticle-containing pressure-sensitive adhesive layers.

The base polymer can be used alone or in combination thereof. As the base polymer, the base polymer in a conventional acrylic pressure-sensitive adhesive can be preferably used. The acrylic pressure-sensitive adhesive usually contains an acrylic polymer (particularly, an acrylic polymer containing a (meth)acrylic acid ester as a main monomer component) as a base polymer. In the acrylic polymer, the (meth)acrylic acid ester may be used alone or in combination thereof. As such a (meth)acrylic acid ester, an alkyl (meth)acrylate can be preferably used. Such alkyl (meth)acrylates in the above-mentioned acrylic polymers include C₁₋₂₀ alkyl (meth)acrylates (preferably C₂₋₁₄ alkyl (meth)acrylates, more preferably C₂₋₁₀ alkyl (meth)acrylates) such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate.

Moreover, examples of (meth)acrylic acid esters other than alkyl (meth)acrylates include (meth)acrylic acid esters having an alicyclic hydrocarbon group such as cyclopentyl (meth)acrylate, cyclohexyl (meth)acrylate, and isobornyl (meth)acrylate, and (meth)acrylic acid esters having an aromatic hydrocarbon group such as phenyl (meth)acrylate.

In this connection, since the (meth)acrylic acid ester is used as a main monomer component of the acrylic polymer, it is important that the ratio of the (meth)acrylic acid ester (particularly, alkyl (meth)acrylates) is, for example, 60% by weight or more (preferably 80% by weight or more) based on the total amount of the monomer components for preparing the acrylic polymer.

In the above-mentioned acrylic polymer, various copolymerizable monomers such as polar group-containing monomers and polyfunctional monomers may be used as monomer components. By the use of the copolymerizable monomers, for example, the adhesive force to an adherend can be improved and cohesive force of the adhesive (pressure-sensitive adhesive) can be enhanced. The copolymerizable monomer can be used alone or in combination thereof.

Examples of the above-mentioned polar group-containing monomers include carboxyl group-containing monomers such as (meth)acrylic acid, itaconic acid, maleic acid, fumaric acid, crotonic acid, and isocrotonic acid or anhydrides thereof (maleic anhydride etc.); hydroxyl group-containing monomers such as hydroxyethyl (meth)acrylates, hydroxypropyl (meth)acrylates, and hydroxybutyl (meth)acrylates; amide group-containing monomers such as acrylamide, methacrylamide, N,N-dimethyl(meth)acrylamide, N-methylol(meth)acrylamide, N-methoxymethyl(meth)acrylamide, and N-butoxymethyl(meth)acrylamide; amino group-containing monomers such as aminoethyl (meth)acrylate, dimethylaminoethyl (meth)acrylate, and t-butylaminoethyl (meth)acrylate; glycidyl group-containing monomers such as glycidyl (meth)acrylate and methylglycidyl (meth)acrylate; cyano group-containing monomers such as acrylonitrile and methacrylonitrile; and heterocycle-containing vinylic monomers such as N-vinyl-2-pyrrolidone, (meth)acryloylmorpholine, as well as N-vinylpyridine, N-vinylpiperidone, N-vinylpyrimidine, N-vinylpiperazine, N-vinylpyrazine, N-vinylpyrrole, N-vinylimidazole, and N-vinyloxazole. As the polar group-containing monomer, a carboxyl group-containing monomer such as acrylic acid or an anhydride thereof is preferable.

The amount of the polar group-containing monomer to be used is 30% by weight or less (e.g., 1 to 30% by weight), preferably 3 to 20% by weight based on the total amount of the monomer components for preparing the acrylic polymer. When the amount of the polar group-containing monomer is more than 30% by weight based on the total amount of the monomer components for preparing the acrylic polymer, for example, cohesive force of the acrylic pressure-sensitive adhesive becomes too high and thus there is a possibility of decrease in pressure-sensitive adhesiveness. In this connection, when the amount of the polar group-containing monomer to be used is too small (for example, when the amount is less than 1% by weight based on the total amount of the monomer components for preparing the acrylic polymer), for example, cohesive force of the acrylic pressure-sensitive adhesive decreases and high shear force is not obtained. In order to adjust the cohesive force of the acrylic pressure-sensitive adhesive, it is possible to use a polyfunctional monomer.

Examples of the polyfunctional monomer include hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylate, polyester acrylate, urethane acrylate, butyl di(meth)acrylate, and hexyl di(meth)acrylate.

The amount of the polyfunctional monomer to be used is 2% by weight or less (e.g., 0.01 to 2% by weight), preferably 0.02 to 1% by weight based on the total amount of the monomer components for preparing the acrylic polymer. When the amount of the polyfunctional monomer is more than 2% by weight based on the total amount of the monomer components for preparing the acrylic polymer, for example, cohesive force of the acrylic pressure-sensitive adhesive becomes too high and thus there is a possibility of decrease in pressure-sensitive adhesiveness. In this connection, when the amount of the polyfunctional monomer to be used is too small (for example, when the amount is less than 0.01% by weight based on the total amount of the monomer components for preparing the acrylic polymer), for example, cohesive force of the acrylic pressure-sensitive adhesive decreases.

Moreover, examples of copolymerizable monomers other than the polar group-containing monomers and the polyfunctional monomers include vinyl esters such as vinyl acetate and vinyl propionate; aromatic vinyl compounds such as styrene and vinyltoluene; olefins or dienes such as ethylene, butadiene, isoprene, and isobutylene; vinyl ethers such as vinyl alkyl ether; vinyl chloride; alkoxyalkyl (meth)acrylate-based monomers such as methoxyethyl (meth)acrylate and ethoxyethyl (meth)acrylate; sulfonic acid group-containing monomers such as sodium vinylsulfonate; phosphate group-containing monomers such as 2-hydroxyethylacryloyl phosphate; imide group-containing monomers such as cyclohexylmaleimide and isopropylmaleimide; isocyanate group-containing monomers such as 2-methacryloyloxyethyl isocyanate; fluorine atom-containing (meth)acrylates; and silicon atom-containing (meth)acrylates.

### Polymerization initiator

In the invention, at the preparation of the acrylic polymer as the above-mentioned base polymer (i.e., at the preparation of the microparticle-containing viscoelastic layer such as the microparticle-containing pressure-sensitive adhesive layer or the microparticle-containing substrate, a curing reaction by heat or an active energy ray using a polymerization initiator such as a thermal polymerization initiator or a photopolymerization initiator (photo initiator) can be utilized. Namely, the microparticle-containing viscoelastic composition may contain a polymerization initiator such as a thermal polymerization initiator or a photopolymerization initiator. Therefore, it is possible to cure the microparticle-containing viscoelastic composition with heat or an energy ray. Thus, when a polymerization initiator (thermal polymerization initiator, photopolymerization initiator, or the like) is contained, it is possible to cure the composition with heat or an active energy ray and hence a microparticle-containing viscoelastic layer having a structure where microparticles are stably contained can be easily formed by forming the microparticle-containing viscoelastic layer (microparticle-containing pressure-sensitive adhesive layer or microparticle-containing substrate) in a state where the microparticles are mixed.

As such a polymerization initiator, because of an advantage that the polymerization time can be shortened, a photopolymerization initiator can be preferably used. Namely, it is preferred to form the microparticle-containing viscoelastic layer having a stable microparticle-containing structure utilizing polymerization by using an active energy ray.

In this connection, the polymerization initiator may be used alone or in combination thereof.

The above-mentioned photopolymerization initiator is not particularly limited. Examples of the photopolymerization initiator include benzoin ether-based photopolymerization initiators, acetophenone-based photopolymerization initiators, α-ketol-based photopolymerization initiators, aromatic sulfonyl chloride-based photopolymerization initiators, optically active oxime-based photopolymerization initiators, benzoin-based photopolymerization initiators, benzyl-based photopolymerization initiators, benzophenone-based photopolymerization initiators, ketal-based photopolymerization initiators, and thioxanthone-based photopolymerization initiators.

Specifically, examples of the benzoin ether-based photopolymerization initiators include benzoin methyl ether, benzoin ethyl ether, benzoin propyl ether, benzoin isopropyl ether, benzoin isobutyl ether, 2,2-dimethoxy-1,2-diphenylethane-1-one, and anisole methyl ether. Examples of the acetophenone-based photopolymerization initiators include 2,2-diethoxyacetophenone, 2,2-dimethoxy-2-phenylacetophenone, 1-hydroxycyclohexyl phenyl ketone, 4-phenoxydichloroacetophenone, and 4-t-butyl-dichloroacetophenone. Examples of the α-ketol-based photopolymerization initiators include 2-methyl-2-hydroxypropiophenone and 1-[4-(2-hydroxyethyl)-phenyl]-2-hydroxy-2-methylpropane-1-one. Examples of the aromatic sulfonyl chloride-based photopolymerization initiators include 2-naphthalenesulfonyl chloride. Examples of the optically active oxime-based photopolymerization initiators include 1-phenyl-1,1-propanedione-2-(o-ethoxycarbonyl)-oxime.

Moreover, examples of the benzoin-based photopolymerization initiators include benzoin. Examples of the benzil-based photopolymerization initiators include benzil. Examples of the benzophenone-based photopolymerization initiators include benzophenone, benzoylbenzoic acid, 3,3'-dimethyl-4-methoxybenzophenone, polyvinylbenzophenone, and α-hydroxycyclohexyl phenyl ketone. Examples of the ketal-based photopolymerization initiators include benzyl dimethyl ketal. Examples of the thioxanthone-based photopolymerization initiators include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, and dodecylthioxanthone.

The amount of the photopolymerization initiator to be used is not particularly limited but can be selected from the range of 0.01 to 5 parts by weight (preferably 0.05 to 3 parts by weight) based on 100 parts by weight of the whole monomer component(s) for forming the base polymer in the microparticle-containing viscoelastic layer (particularly, the whole monomer component(s) for forming the acrylic polymer containing (meth)acrylic acid esters as main monomer components).

In activating the photopolymerization initiator, it is important to irradiate the microparticle-containing viscoelastic composition with an active energy ray. Examples of such an active energy ray include ionizing radiations such as α-ray, β-ray, γ-ray, neutron radiation, and electron beam, and an ultraviolet ray. Of these, an ultraviolet ray is preferable. Moreover, the irradiation energy of the active energy ray and the irradiation time thereof are not particularly limited so long as the photopolymerization initiator can be activated to generate the reaction of the monomer components.

Examples of the above-mentioned thermal polymerization initiators include azo-based polymerization initiators (e.g., 2,2'-azobisisobutyronitrile, 2,2'-azobis-2-methylbutyronitrile, 2,2'-azobis(2-methylpropionic acid)diemthyl, 4,4'-azobis-4-cyanovalerianic acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate, 2,2'-azobis(N,N'-dimethyleneisobutylamidine) dihydrochloride, etc.), peroxide-based polymerization initiators (e.g., dibenzoyl peroxide, tert-butylpermaleate, etc.), and redox-based polymerization initiators. The amount of the thermal polymerization initiator to be used is not particularly limited and may be a range where it is conventionally utilizable as a thermal polymerization initiator.

The microparticle-containing viscoelastic layer of the invention may contain cells. The amount of the cells mixable in the microparticle-containing viscoelastic layer containing cells is not particularly limited and can be suitably selected depending on the intended purpose and the like. For example, the amount thereof is 5 to 40% by volume, preferably 8 to 30% by volumes based on the total volume of the microparticle-containing viscoelastic layer containing cells. When the mixing amount thereof is less than 5% by volume, the effect of mixing cells is not obtained and when the amount thereof is more than 40% by volume, cells perforated through the microparticle-containing viscoelastic layer may be formed and adhesion performance and/or appearance become worse.

It is fundamentally preferable that the cells mixed in the microparticle-containing viscoelastic layer containing cells are desirably closed cells. However, there may be closed cells together with interconnected cells.

Moreover, although these cells usually have a spherical (especially, completely spherical) shape, they may be in an irregular spherical shape. The average cell size (diameter) of the above-described cells is not particularly limited. For example, it can be selected from the range of 1 to 1000 µm (preferably 10 to 500 µm, more preferably 30 to 300 µm).

A gas component (a gas component which forms cells; hereinafter, sometimes referred to as "cell-forming gas") contained in the cells is not particularly limited. Examples of the gas components include inert gases such as nitrogen, carbon dioxide, and argon or various gas components including air. In the case where a reaction such as a polymerization reaction is carried out after the cell-forming gas is mixed, it is important to employ a gas which would never inhibit the reaction as the cell-forming gas. As the cell-forming gas, nitrogen is suitable in view of no inhibition of the reaction and costs and so on. In order to stably mix fine cells, a surfactant may be added to the microparticle-containing viscoelastic composition. As the surfactant, any of conventional hydrocarbon-based surfactants, silicon-based surfactants, and fluorine-based surfactants can be used. Particularly, fluorine-based, preferably fluorine-based surfactants are preferred and in particular, fluorine-based surfactants having a weight-average molecular weight of 20,000 or more may be used. Since a fluorine-based surfactant having a weight-average molecular weight of 20,000 or more is used as a fluorine-based surfactant, a sufficient amount of cells are stably mixed in the microparticle-containing viscoelastic layer containing cells. It is surmised that this is because film strength of the formed cells is strengthened since the weight-average molecular weight of the fluorine-based polymer constituting the fluorine-based surfactant is so large as 20,000 or more and hence the amount of miscible cells increases as well as stability of the cells increases and thus integration of the cells hardly proceeds.

As the fluorine-based surfactant, it is preferred to use a fluorine-based surfactant having a weight-average molecular weight of 20,000 or more and the molecular weight may be selected from the range of 20,000 to 100,000 (preferably 22,000 to 80,000, more preferably 24,000 to 60,000). When the weight-average molecular weight of the fluorine-based polymer of the fluorine-based surfactant is less than 20,000, mixing property of cells and stability of the mixed cells decrease. In addition, even when mixed, the integration of the cells is apt to proceed during the period from the mixing of the cells until the formation of the microparticle-containing pressure-sensitive adhesive layer containing cells (hereinafter, sometimes referred to as "microparticle-containing pressure-sensitive adhesive layer containing cells") formed of the microparticle-containing viscoelastic layer containing cells and the microparticle-containing substrate containing cells (hereinafter, sometimes referred to as "microparticle-containing substrate containing cells"). As a result, the amount of the cells in the microparticle-containing pressure-sensitive adhesive layer containing cells or the microparticle-containing substrate containing cells decreases and cells (pores) which perforate the microparticle-containing pressure-sensitive adhesive layer containing cells or the microparticle-containing substrate containing cells may be formed.

In this connection, the fluorine-based polymer may be used alone or in combination thereof.

Such a fluorine-based polymer contains at least a monomer containing a fluorine atom-containing group (hereinafter, sometimes referred to as "fluorine-based monomer"). The fluorine-based monomer may be used alone or in combination thereof.

As the above-mentioned fluorine-based monomer, for example, a vinylic monomer having a fluorine atom-containing group can be preferably used. In the vinylic monomer having a fluorine atom-containing group, as the fluorine atom-containing group, a perfluoro group is preferred and the perfluoro group may be monovalent, or may be divalent or multivalent. As the monovalent fluorine atom-containing group (especially perfluoro group), for example, a perfuloroalkyl group (e.g., CF₃CF₂ group, CF₃CF₂CF₂ group, etc.) can be suitably used. The perfluoroalkyl group may be bonded to a vinylic monomer through the other group (e.g., -O- group, -OCO- group, alkylene group, etc.). Specifically, the monovalent fluorine atom-containing group may be a form of a perfluoroether group (perfluoroalkyl-oxy group, etc.), a perfluoroester group (perfluoroalkyl-oxycarbonyl group, perfluoroalkyl-carbonyloxy group, etc.), or the like. Examples of the above-mentioned perfluoroalkyl ether group include CF₃CF₂O group, and CF₃CF₂CF₂O group. Moreover, examples of the above-mentioned perfluoroester group include CF₃CF₂OCO group, CF₃CF₂CF₂OCO group, CF₃CF₂COO group, and CF₃CF₂CF₂COO group.

Moreover, in the divalent or multivalent fluorine atom-containing group, examples of the divalent fluorine atom-containing group include perfluoroalkylene groups corresponding to the above-mentioned perfluoroalkyl groups (e.g., tetrafluoroethylene group, hexafluoropropylene group, etc.). The perfluoroalkylene group may be bonded to the main chain through the other group (e.g., -O- group, - OCO- group, alkylene group, etc.) as in the case of the above-mentioned perfluoroalkyl group and, for example, may be a form of a perfluoroalkylene-oxy group such as a tetrafluoroethylene-oxy group or a hexafluoropropylene-oxy group; a perfluoroalkylne-oxycarbonyl group such as a tetrafluoroethylene-oxycarbonyl group or a hexafluoropropylene-oxycarbonyl group.

In the fluorine atom-containing groups such as perfluoro groups (perfluoroalkyl groups, perfluoroalkylene groups, etc.), the number of carbon atoms at the perfluoro group site is not particularly limited and, for example, is 1 or 2 or more (preferably 3 to 30, more preferably 4 to 20).

As the vinylic monomer having a fluorine atom-containing group, a (meth)acrylic acid ester having a fluorine atom-containing group is suitable. As the (meth)acrylic acid ester having a fluorine atom-containing group, for example, a perfluoroalkyl (meth)acrylate is suitable. Examples of the perfluoroalkyl (meth)acrylate include perfluoro-C₁₋₂₀-alkyl (meth)acrylates such as perfluoromethyl (meth)acrylate, perfluoroethyl (meth)acrylate, perfluoropropyl (meth)acrylate, perfluoroisopropyl (meth)acrylate, perfluorobutyl (meth)acrylate, perfluoroisobutyl (meth)acrylate, perfluoro-s-butyl (meth)acrylate, perfluoro-t-butyl (meth)acrylate, perfluoropentyl (meth)acrylate, perfluorohexyl (meth)acrylate, perfluoroheptyl (meth)acrylate, and perfluorooctyl (meth)acrylate.

As the fluorine-based polymer, as a monomer component, a monomer component copolymerizable with the fluorine-based monomer (sometimes referred to as "non-fluorine-based monomer") may be used together with the fluorine-based monomer. The non-fluorine-based monomer may be used alone or in combination thereof.

For example, in the case where the fluorine-based monomer is a vinylic monomer having a fluorine atom-containing group (especially, a (meth)acrylic acid ester having a fluorine atom-containing group), a (meth)acrylic acid ester can be suitably used as the non-fluorine-based monomer and an alkyl (meth)acrylate is particularly preferred. Examples of the alkyl (meth)acrylate include C₁₋₂₀ alkyl (meth)acrylates (preferably C₄₋₁₈ alkyl (meth)acrylates) such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate.

Examples of the (meth)acrylic acid esters other than the (meth)acrylic acid alkyl esters include (meth)acrylic acid esters having an alicyclic hydrocarbon group such as cyclopentyl (meth)acrylate, cyclohexyl (meth)acrylate, and isobornyl (meth)acrylate, and (meth)acrylic acid esters having an aromatic hydrocarbon group such as phenyl (meth)acrylate.

Moreover, examples of the non-fluorine-based monomers include carboxyl group-containing monomers such as (meth)acrylic acid, itaconic acid, maleic acid, fumaric acid, crotonic acid, and isocrotonic acid or anhydrides thereof; sulfonic acid group-containing monomers such as sodium vinylsulfonate; aromatic vinyl compounds such as styrene and vinyltoluene; cyano group-containing monomers such as acrylonitrile and methacrylonitrile; olefins or dienes such as ethylene, butadiene, isoprene, and isobutylene; vinyl esters such as vinyl acetate; vinyl ethers such as vinyl alkyl ether; vinyl chloride; amide group-containing monomers such as acrylamide, methacrylamide, N-vinylpyrrolidone, N,N-dimethyl(meth)acrylamide, N-methylol(meth)acrylamide, N-methoxymethyl(meth)acrylamide, and N-butoxymethyl(meth)acrylamide; hydroxyl group-containing monomers such as hydroxyethyl (meth)acrylates, hydroxypropyl (meth)acrylates, and hydroxybutyl (meth)acrylates; amino group-containing monomers such as aminoethyl (meth)acrylate, dimethylaminoethyl (meth)acrylate, and t-butylaminoethyl (meth)acrylate; glycidyl group-containing monomers such as glycidyl (meth)acrylate and methylglycidyl (meth)acrylate; and isocyanate group-containing vinylic monomers such as 2-methacryloyloxyethyl isocyanate. Furthermore, as the non-fluorine-based monomer, for example, a polyfunctional copolymerizable monomer (polyfunctional monomer) such as triethylene glycol di(meth)acrylate, diethylene glycol di(meth)acrylate, ethylene glycol di(meth)acrylate, tetraethylene glycol di(meth)acrylate, neopentyl glycol di(meth)acrylate, 1,6-hexanediol di(meth)acrylate, trimethylolpropane tri(meth)acrylate, pentaerythritol tri(meth)acrylate, dipentaerythritol hexa(meth)acrylate, or divinylbenzene may be used.

In the invention, as the fluorine-based surfactant, a fluorine-based surfactant containing a fluorine-based polymer containing a vinylic monomer having a fluorine atom-containing group (especially, (meth)acrylic acid ester having a fluorine atom-containing group) as at least a monomer component is suitable, and particularly, a fluorine-based surfactant containing a fluorine-based polymer containing a vinylic monomer having a fluorine atom-containing group (especially, (meth)acrylic acid ester having a fluorine atom-containing group) and a (meth)acrylic acid ester (especially, alkyl (meth)acrylate) as at least monomer components can be suitably used. In the fluorine-based polymer constituting such a fluorine-based surfactant, the ratio of the vinylic monomer having a fluorine atom-containing group (especially, (meth)acrylic acid ester having a fluorine atom-containing group) is not particularly limited and can be suitably selected depending on the objective properties of the surfactant.

Specifically, as the fluorine-based surfactant, trade name "F TOP EF-352" (manufactured by JEMCO Inc.), trade name "F TOP EF-801" (manufactured by JEMCO Inc.), trade name "UNI DYNE TG-656" (manufactured by Daikin Industries, Ltd.), or the like can be used.

The amount of the fluorine-based surfactant to be used (solid content) is not particularly limited but, for example, can be selected from the range of 0.01 to 2 parts by weight (preferably 0.03 to 1.5 parts by weight, more preferably 0.05 to 1 part by weight) based on 100 parts by weight of the whole monomers for forming the base polymer in the microparticle-containing viscoelastic composition containing cells (especially, the whole monomers for forming the acrylic polymer containing a (meth)acrylic acid ester as a main monomer component).

When the amount of the fluorine-based surfactant to be used is less than 0.01 part by weight based on 100 parts by weight of the whole monomers for forming the base polymer in the microparticle-containing viscoelastic composition, mixing ability of cells decreases and it becomes difficult to mix a sufficient amount of the cells in the microparticle-containing viscoelastic composition containing cells. On the other hand, when the amount exceeds 2 parts by weight, adhesion performance decreases.

In the invention, in order to stably mix cells in the microparticle-containing viscoelastic layer to achieve stable presence thereof, the cells are preferably mixed as a final component to be mixed in the microparticle-containing viscoelastic composition and particularly, it is preferred to enhance the viscosity of the microparticle-containing viscoelastic composition before cell mixing (sometimes referred to as "microparticle-containing viscoelastic precursor for containing cells"; for example, in the case where the microparticle-containing viscoelastic composition containing cells is a microparticle-containing pressure-sensitive adhesive composition containing cells, pressure-sensitive adhesive precursor). The viscosity of the microparticle-containing viscoelastic precursor for containing cells (pressure-sensitive adhesive precursor or the like) is not particularly limited so far as it is viscosity at which the mixed cells can be stably retained. For example, the viscosity measured under conditions of a rotor of No. 5 rotor, a rotation number of 10 rpm, and a measuring temperature of 30°C using a BH viscometer as a viscometer is desirably 5 to 50 Pa·s (preferably 10 to 40 Pa·s). When the viscosity of the microparticle-containing viscoelastic precursor for containing cells (BH viscometer, No. 5 rotor, 10 rpm, 30°C) is less than 5 Pa·s, viscosity is too low and the mixed cells may be immediately integrated and may escape to outside of the system in some cases. On the other hand, when the viscosity exceeds 50 Pa·s, the formation of the microparticle-containing viscoelastic precursor for containing cells becomes difficult owing to excessively high viscosity.

The viscosity of the microparticle-containing viscoelastic precursor for containing cells can be, for example, adjusted by a method of mixing various polymer components such as acrylic rubber and a thickening additive and the like, a method of partially polymerizing a monomer component for forming the base polymer (e.g., a monomer component such as a (meth)acrylic acid ester for forming an acrylic polymer, etc.), and the like method.

Specifically, a microparticle-containing viscoelastic precursor for containing cells, which can stably contain cells and has an appropriate viscosity, can be prepared by mixing a monomer component for forming the base polymer (e.g., a monomer component such as a (meth)acrylic acid ester for forming an acrylic polymer, etc.) with a polymerization initiator (e.g., a photopolymerization initiator, etc.) to prepare a monomer mixture, subjecting the monomer mixture to a polymerization reaction in accordance with the kind of the polymerization initiator to prepare a composition (syrup) in which only a part of the monomer component is polymerized, and subsequently mixing a fluorine-based surfactant containing a fluorine-based polymer having a weight-average molecular weight of 20,000 or more and optional microparticles and various additives with the syrup.

Then, cells is introduced to the microparticle-containing viscoelastic precursor for containing cells and mixed therein to thereby obtain a microparticle-containing viscoelastic composition containing cells, which stably contains cells. At the preparation of the above-mentioned syrup, a fluorine-based surfactant containing a fluorine-based polymer having a weight-average molecular weight of 20,000 or more and, according to the necessity, hollow microparticles and various additives may be suitably mixed beforehand into the monomer mixture.

The method of mixing cells is not particularly limited and conventional cell mixing method can be utilized. For example, examples of an apparatus include an apparatus including a stator having a large number of fine teeth on a disc having a through-hole at the central part and a rotor, which is opposite to the stator having teeth, having fine teeth on a disc like the stator, and the like apparatus.

The microparticle-containing viscoelastic precursor for containing cells is introduced between the teeth on the stator and the teeth on the rotor in the apparatus and a gas component for forming cells (cell-forming gas) is introduced into the microparticle-containing viscoelastic precursor for containing cells through the through-hole under high-speed rotation of the rotor, to thereby obtain the microparticle-containing viscoelastic composition containing cells finely dispersed and mixed in the microparticle-containing viscoelastic precursor for containing cells.

In this connection, in order to suppress or prevent the integration of the cells, it is preferred to continuously perform from the step of mixing cells to the step of forming the microparticle-containing viscoelastic layer containing cells. Namely, after the microparticle-containing viscoelastic composition containing cells is prepared by mixing cells as mentioned above, subsequently, it is preferred to form the microparticle-containing viscoelastic composition containing cells by utilizing a conventional method of forming a pressure-sensitive adhesive layer using the microparticle-containing viscoelastic composition containing cells.

Since such a microparticle-containing viscoelastic composition containing cells hardly causes the integration of cells and stably contains a sufficient amount of cells, the composition can be suitably utilized as a pressure-sensitive adhesive composition containing cells for forming a pressure-sensitive adhesive layer containing cells in a pressure-sensitive adhesive tape or sheet by suitably selecting a base polymer constituting the microparticle-containing viscoelastic composition containing cells, additives, and the like. Moreover, the microparticle-containing viscoelastic composition containing cells can be suitably utilized also as a substrate material containing cells for forming a substrate containing cells (especially, a substrate containing cells in a pressure-sensitive adhesive tape or sheet) by suitably selecting a base polymer constituting the microparticle-containing viscoelastic composition containing cells, additives, and the like. Namely, the viscoelastic layer containing cells formed of the microparticle-containing viscoelastic composition containing cells can be suitably used as a pressure-sensitive adhesive layer containing cells or a substrate containing cells.

### Other components

The microparticle-containing viscoelastic layer of the invention may contain, in addition to the above-mentioned components (microparticles having a 90% particle diameter of 30 µm or less, a base polymer, a polymerization initiator, a surfactant, etc.), suitable additives depending on the application fields of the microparticle-containing viscoelastic layer. For example, in the case where the microparticle-containing viscoelastic layer is a pressure-sensitive adhesive layer, the microparticle-containing viscoelastic layer may contain suitable additives such as a crosslinking agent (e.g., a polyisocyanate-based crosslinking agent, a silicon-based crosslinking agent, an epoxy-based crosslinking agent, an alkyl etherified melamine-based crosslinking agent, etc.), a tackifier (e.g., solid or liquid one composed of a rosin derivative resin, a polyterpene resin, a petroleum resin, an oil-soluble phenol resin, or the like), a plasticizer, a filler, an aging inhibitor, an antioxidant, a colorant (a pigment, a dye, or the like), and the like. For example, in the case where the microparticle-containing viscoelastic layer is formed using a photopolymerization initiator, a pigment (colored pigment) can be used to an extent not inhibiting photopolymerization in order to color the viscoelastic layer. In the case where black color is desired as color of the microparticle-containing viscoelastic layer, for example, carbon black can be employed. The amount of carbon black to be used as the colored pigment is desirably selected from the range of 0.15 part by weight or less (e.g., 0.001 to 0.15 part by weight), preferably 0.01 to 0.1 part by weight based on 100 parts by weight of the total monomers for forming the base polymer in the microparticle-containing viscoelastic composition (especially, total monomer components for forming the acrylic polymer containing a (meth)acrylic acid ester as a main monomer component).

In the case where coloration is performed with a colored pigment, when the pressure-sensitive adhesive layer is prepared using microparticles represented by glass balloons having a large average particle diameter as shown in the conventional technologies instead of the microparticles having a 90% particle diameter of 30 µm or less, the state of coloration becomes slightly uneven. However, when it is prepared using the microparticles having a 90% particle diameter of 30 µm or less, the state of coloration is homogeneous and a high-class feeling can be imparted.

### Pressure-sensitive adhesive tape or sheet

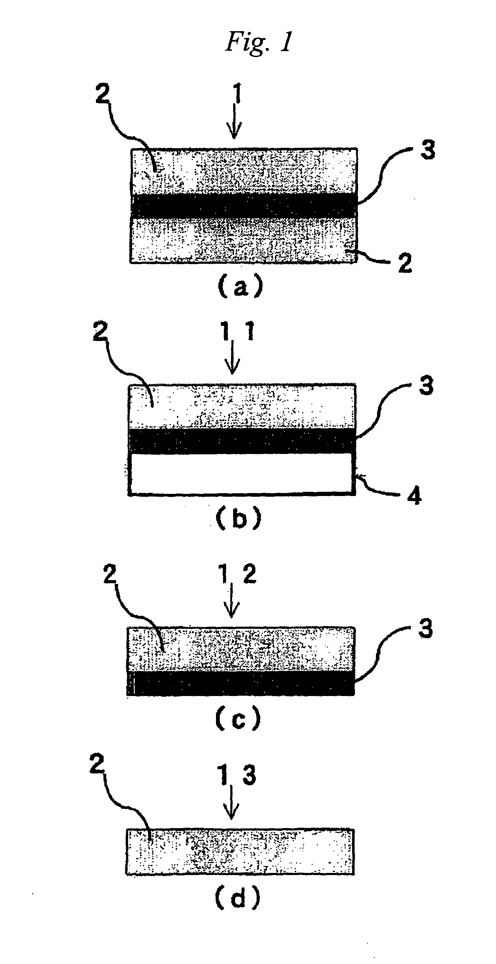

The pressure-sensitive adhesive tape or sheet of the invention contains the microparticle-containing pressure-sensitive adhesive layer and/or microparticle-containing substrate formed of the above-mentioned microparticle-containing viscoelastic layer. Such a pressure-sensitive adhesive tape or sheet may have a form of double-sided pressure-sensitive adhesive tape or sheet in which both sides are adhesive surfaces (pressure-sensitive adhesive surfaces) or a form of pressure-sensitive adhesive tape or sheet in which only one side is an adhesive surface. Specifically, as the pressure-sensitive adhesive tape or sheet, in the case where the microparticle-containing viscoelastic layer is a microparticle-containing pressure-sensitive adhesive layer, for example, there may be mentioned (1) a double-sided pressure-sensitive adhesive tape or sheet fitted with a substrate and having a microparticle-containing pressure-sensitive adhesive layer, which has a constitution in which a microparticle-containing pressure-sensitive adhesive layer is formed on at least one surface of the substrate and pressure-sensitive adhesive surfaces are formed at both sides of the substrate (a double-sided pressure-sensitive adhesive tape or sheet fitted with a substrate having a microparticle-containing pressure-sensitive adhesive layer) as shown in Fig. 1(a) or Fig. 1(b); (2) a pressure-sensitive adhesive tape or sheet fitted with a substrate and having a microparticle-containing pressure-sensitive adhesive layer, which has a constitution in which a microparticle-containing pressure-sensitive adhesive layer is formed on one surface of the substrate (a one-sided pressure-sensitive adhesive tape or sheet fitted with a substrate having a microparticle-containing pressure-sensitive adhesive layer) as shown in Fig. 1(c); (3) a substrate-less double-sided pressure-sensitive adhesive tape or sheet having a microparticle-containing pressure-sensitive adhesive layer, which has a constitution which is formed of a microparticle-containing pressure-sensitive adhesive layer alone (a substrate-less double-sided pressure-sensitive adhesive tape or sheet having a microparticle-containing pressure-sensitive adhesive layer) as shown in Fig. 1(d); and the like.

Fig. 1 is a schematic cross-sectional view partially illustrating examples of the pressure-sensitive adhesive tape or sheet of the invention. In Fig. 1, each of 1, 11, 12, and 13 is a pressure-sensitive adhesive tape or sheet having a microparticle-containing pressure-sensitive adhesive layer, 2 is a microparticle-containing pressure-sensitive adhesive layer, 3 is a substrate (microparticle-non-containing substrate), and 4 is a pressure-sensitive adhesive layer (microparticle-non-containing pressure-sensitive adhesive layer). The pressure-sensitive adhesive tape or sheet having a microparticle-containing pressure-sensitive adhesive layer 1 shown in Fig. 1(a) has a constitution in which the microparticle-containing pressure-sensitive adhesive layer 2 is formed on both surfaces of the microparticle-non-containing substrate 3. The pressure-sensitive adhesive tape or sheet having a microparticle-containing pressure-sensitive adhesive layer 11 shown in Fig. 1(b) has a constitution in which the microparticle-containing pressure-sensitive adhesive layer 2 is formed on one surface of the microparticle-non-containing substrate 3 and the microparticle-non-containing pressure-sensitive adhesive layer 4 is formed on another surface. The pressure-sensitive adhesive tape or sheet having a microparticle-containing pressure-sensitive adhesive layer 12 shown in Fig. 1(c) has a constitution in which the microparticle-containing pressure-sensitive adhesive layer 2 is formed on one surface of the microparticle-non-containing substrate 3. The pressure-sensitive adhesive tape or sheet having a microparticle-containing pressure-sensitive adhesive layer 13 shown in Fig. 1(d) has a constitution which is formed of the microparticle-containing pressure-sensitive adhesive layer 2 alone.

In this connection, in the case where the pressure-sensitive adhesive tape or sheet having a microparticle-containing pressure-sensitive adhesive layer is a double-sided pressure-sensitive adhesive tape or sheet fitted with a substrate as shown in Fig. 1(a) or Fig. 1(b), the pressure-sensitive adhesive layer (adhesive layer) formed on both surfaces of the substrate may be a microparticle-containing pressure-sensitive adhesive layer as shown in Fig. 1(a) or the pressure-sensitive adhesive layer formed on one surface of the substrate may be a microparticle-containing pressure-sensitive adhesive layer and the pressure-sensitive adhesive layer formed on another surface of the substrate may be a pressure-sensitive adhesive layer containing no microparticles (hereinafter, sometimes referred to as "microparticles-non-containing pressure-sensitive adhesive layer") as shown in Fig. 1(b). Moreover, as shown in Fig. 1(a) to Fig. 1(c), in the case where the pressure-sensitive adhesive tape or sheet having a microparticle-containing pressure-sensitive adhesive layer has a substrate, the substrate may be a microparticle-containing substrate formed of the microparticle-containing viscoelastic composition or may be a substrate containing no microparticles (hereinafter, sometimes referred to as "microparticle-non-containing substrate").

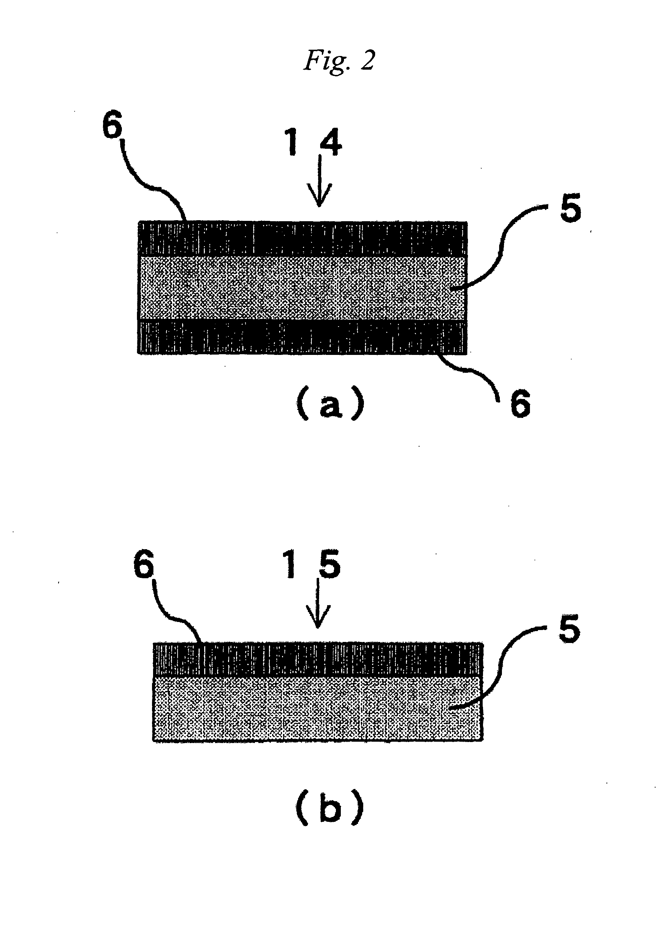

Moreover, in the case where the microparticle-containing viscoelastic layer formed of the microparticle-containing viscoelastic composition is a microparticle-containing substrate, examples of the pressure-sensitive adhesive tape or sheet include (1) a double-sided pressure-sensitive adhesive tape or sheet fitted with a substrate and having a microparticle-containing substrate, which has a constitution in which a pressure-sensitive adhesive layer is formed on at least one surface of the microparticle-containing substrate and a pressure-sensitive adhesive surface is formed at both sides of the substrate (a double-sided pressure-sensitive adhesive tape or sheet fitted with a substrate having a microparticle-containing substrate) as shown in Fig. 2(a); and (2) a pressure-sensitive adhesive tape or sheet fitted with a substrate and having a microparticle-containing substrate, which has a constitution in which a microparticle-containing pressure-sensitive adhesive layer is formed on one surface of the microparticle-containing substrate (a one-sided pressure-sensitive adhesive tape or sheet fitted with a substrate having a microparticle-containing substrate) as shown in Fig. 2(b).

Fig. 2 is a schematic cross-sectional view partially illustrating examples of the pressure-sensitive adhesive tape or sheet of the invention. In Fig. 2, each of 14 and 15 is a pressure-sensitive adhesive tape or sheet having a microparticle-containing substrate, 5 is a microparticle-containing substrate, and 6 is a pressure-sensitive adhesive layer. The pressure-sensitive adhesive tape or sheet having a microparticle-containing substrate 14 shown in Fig. 2(a) has a constitution in which the pressure-sensitive adhesive layer 6 is formed on both sides of the microparticle-containing substrate 5. The pressure-sensitive adhesive tape or sheet having a microparticle-containing substrate 15 shown in Fig. 2(b) has a constitution in which the pressure-sensitive adhesive layer 6 is formed on one surface of the microparticle-containing substrate 5.

In the pressure-sensitive adhesive tape or sheet having a microparticle-containing substrate shown in Fig. 2(a) or 2(b), the pressure-sensitive adhesive layer may be a microparticle-containing pressure-sensitive adhesive layer formed of the microparticle-containing viscoelastic layer or may be a microparticle-non-containing pressure-sensitive adhesive layer. Moreover, in the both-sided pressure-sensitive adhesive tape or sheet fitted with a substrate and having a microparticle-containing substrate, two pressure-sensitive adhesive layers may be the same pressure-sensitive adhesive layer or different pressure-sensitive adhesive layers.

Namely, the both-sided pressure-sensitive adhesive tape or sheet fitted with a substrate and having a microparticle-containing substrate may have any of a constitution in which the pressure-sensitive adhesive layer at the both sides is a microparticle-containing pressure-sensitive adhesive layer, a constitution in which the pressure-sensitive adhesive layer at one side is a microparticle-containing pressure-sensitive adhesive layer and the pressure-sensitive adhesive layer at another side is a microparticle-non-containing pressure-sensitive adhesive layer, and a constitution in which the pressure-sensitive adhesive layer at the both sides is a microparticle-non-containing pressure-sensitive adhesive layer.

Moreover, the pressure-sensitive adhesive tape or sheet may be formed in a form in which it is wound in a roll shape and may be formed in a form in which the sheet is laminated. Namely, the pressure-sensitive adhesive tape or sheet of the invention may have a form of a sheet shape, a tape shape, or the like. In this connection, in the case where the pressure-sensitive adhesive tape or sheet has a form in which it is wound in a roll shape, for example, it can be prepared by winding the pressure-sensitive adhesive layer such as the microparticle-containing pressure-sensitive adhesive layer in a roll shape in a state protected with a release-treatment layer formed at the backside of a separator or a substrate.

### Microparticle-containing viscoelastic layer

The microparticle-containing viscoelastic layer formed of the microparticle-containing viscoelastic composition (microparticle-containing pressure-sensitive adhesive layer or microparticle-containing substrate) can be formed as mentioned above using the microparticle-containing viscoelastic composition utilizing a conventional method for forming the microparticle-containing pressure-sensitive adhesive layer or the microparticle-containing substrate. For example, the microparticle-containing viscoelastic layer such as the microparticle-containing pressure-sensitive adhesive layer or the microparticle-containing substrate can be formed by applying the microparticle-containing viscoelastic composition on a predetermined surface and, if necessary, performing drying, curing, and/or the like. At the formation of the microparticle-containing viscoelastic layer, as mentioned above, it is preferred to perform the curing by heating or irradiation with an active energy ray. Namely, using a microparticle-containing viscoelastic composition containing a polymerization initiator such as a thermal polymerization initiator or a photopolymerization initiator, the microparticle-containing viscoelastic layer such as the microparticle-containing pressure-sensitive adhesive layer or the microparticle-containing substrate can be formed by applying the microparticle-containing viscoelastic composition on a predetermined surface and then performing curing by heating or irradiation with an active energy ray in a state that microparticles are stably retained.

The thickness of the microparticle-containing viscoelastic layer (microparticle-containing pressure-sensitive adhesive layer or microparticle-containing substrate) is not particularly limited and, for example, can be selected from the range of 200 to 5000 µm (preferably 300 to 4000 µm, more preferably 400 to 3000 µm). When the thickness of the microparticle-containing viscoelastic layer is less than 200 µm, a cushioning property decreases and adhesiveness to a curved surface or convex-concave surface decreases. On the other hand, when the thickness is more than 5000 µm, a layer or sheet having a homogeneous thickness is hardly obtained.

In this connection, the microparticle-containing viscoelastic layer may have any form of single layer or double layer.

### Substrate

In the pressure-sensitive adhesive tape or sheet having a microparticle-containing pressure-sensitive adhesive layer, in the case where the substrate is a microparticle-non-containing substrate, as the substrate, for example, there can be used an appropriate thin article, e.g., a paper-based substrate such as paper; a fiber-based substrate such as a fabric, a non-woven fabric, and a net; a metal-based substrate such as a metal foil and a metal plate; a plastic-based substrate such as a plastic film or sheet; a rubber-based substrate such as a rubber sheet; a foamed article such as a foamed sheet; a laminate thereof (particularly, a laminate of a plastic-based substrate and the other substrate, a laminate of a plastic film (or sheet) per se, etc.). As the substrate, a plastic-based substrate such as a plastic film or sheet can be suitably used.

Examples of materials in such a plastic film and sheet include olfinic resins using α-olefin as a monomer component, such as polyethylene (PE), polypropylene (PP), ethylene-propylene copolymers, and ethylene-vinyl acetate copolymers (EVA); polyester-based resins such as polyethylene terephthalate (PET), polyethylene naphthalate (PEN), and polybutylene terephthalate (PBT); polyvinyl chloride (PVC); vinyl acetate-based resins; polyphenylene sulfide (PPS); amide-based resins such as polyamides (Nylon) and wholly aromatic polyamides (aramide); polyimide-based resins; and polyether ether ketone (PEEK). These materials can be used alone or in combination thereof.

In the case where a plastic-based substrate is used as the substrate, deforming properties such as elongation rate may be regulated by stretching treatment or the like. Moreover, as the substrate, in the case where the microparticle-containing pressure-sensitive adhesive layer is formed by curing with an active energy ray, it is preferred to use one which does not inhibit transmission of the active energy ray.

The thickness of the substrate can be suitably selected depending on strength, flexibility, intended use, and the like and, for example, is generally 1000 µm or less (e.g., 1 to 1000 µm), preferably 1 to 500 µm, more preferably about 3 to 300 µm, but is not limited thereto. The substrate may have a single layer form or may have a laminated form.

The surface of the substrate may have undergone a conventional surface treatment, e.g., an oxidation treatment by a chemical or physical method, such as corona treatment, chromic acid treatment, ozone exposure treatment, flame exposure treatment, high-voltage electric-shock exposure treatment, or ionizing radiation treatment, or may have undergone a coating treatment with an undercoat or a release agent in order to enhance adhesiveness with the microparticle-containing pressure-sensitive adhesive layer and the like.

Microparticle-non-containing pressure-sensitive adhesive layer

In the pressure-sensitive adhesive tape or sheet having the microparticle-containing pressure-sensitive adhesive layer and/or microparticle-containing substrate, in the case where it has a microparticle-non-containing pressure-sensitive adhesive layer as a pressure-sensitive adhesive layer (in the case where the pressure-sensitive adhesive tape or sheet having the microparticle-containing pressure-sensitive adhesive layer is a double-sided pressure-sensitive adhesive tape or sheet and the microparticle-containing pressure-sensitive adhesive layer is formed on one side of the substrate and the microparticle-non-containing pressure-sensitive adhesive layer is formed on another side of the substrate), the above-mentioned microparticle-non-containing pressure-sensitive adhesive layer can be formed using a conventional pressure-sensitive adhesive (e.g., an acrylic pressure-sensitive adhesive, a rubber-based pressure-sensitive adhesive, a vinyl alkyl ether-based pressure-sensitive adhesive, a silicon-based pressure-sensitive adhesive, a polyester-based pressure-sensitive adhesive, a polyamide-based pressure-sensitive adhesive, a urethane-based pressure-sensitive adhesive, a fluorine-based pressure-sensitive adhesive, an epoxy-based pressure-sensitive adhesive, etc.), utilizing a conventional method for forming the pressure-sensitive adhesive layer. Moreover, the thickness of the microparticle-non-containing pressure-sensitive adhesive layer is not particularly limited and can be suitably selected depending on the purpose and method of use.

### Separator

In the invention, in order to protect the adhesive surface (pressure-sensitive adhesive surface) of the pressure-sensitive adhesive layer such as the microparticle-containing pressure-sensitive adhesive layer or microparticle-non-containing pressure-sensitive adhesive layer, a separator (release liner) may be employed. Namely, the separator is not necessarily provided. The separator is peeled off at the time when the adhesive surface protected with the separator is utilized (namely, at the time when an adherend is attached to the pressure-sensitive adhesive layer protected with the separator).

As such a separator, a conventional release paper or the like can be used. Specifically, as the separator, for example, there can be used a substrate having a release-treatment layer treated with a release agent on at least one side and also a low-adhesive substrate composed of a fluorine-based polymer (e.g., polytetrafluroroethylene, polychlorotrifluoroethylene, polyvinyl fluoride, a tetrafluoroethylene/hexafluoropropylene copolymer, a chlorofluoroethylene/vinylidene fluoride copolymer, or the like), a low-adhesive substrate composed of a non-polar polymer (e.g., an olefinic resin such as polyethylene or polypropylene, or the like), or the like. It is also possible to use the separator as a substrate for supporting the microparticle-containing pressure-sensitive adhesive layer.

As the separator, for example, there can be suitably used a separator in which a release-treatment layer is formed on at least one side of a substrate for release liner. Examples of such a substrate for release liner include plastic-based substrate films (synthetic resin films) such as polyester films (polyethylene terephthalate film, etc.), olefinic resin films (polyethylene film, polypropylene film, etc.), polyvinyl chloride film, polyimide films, polyamide films (Nylon films), and rayon films and papers (bond paper, Japanese paper, kraft paper, glassine paper, synthetic paper, topcoat paper, etc.) as well as those obtained by multilayer formation thereof through lamination, co-extrusion, or the like (complexes of two or three layers).

On the other hand, the release agent constituting the release-treatment layer is not particularly limited and, for example, a silicon-based release agent, a fluorine-based release agent, a long-chain alkyl-based release agent, or the like can be used. The release agent can be used alone or in combination thereof.

The thickness and formation method of the separator are not particularly limited.

Since the pressure-sensitive adhesive tape or sheet of the invention has the pressure-sensitive adhesive layer such as the microparticle-containing pressure-sensitive adhesive layer or microparticle-containing substrate containing a sufficient amount of microparticles, the tape or sheet can be suitably used as a pressure-sensitive adhesive tape or sheet to be utilized in application fields where an excellent adhesion strength at high temperature is required, without deterioration in excellent adhesion strength at ordinary temperature and shear strength.

Method for preparing microparticle-containing viscoelastic layer

With regard to the microparticle-containing viscoelastic composition of the invention, it is suitable to cure a coating composition thereof by photopolymerization through irradiation with an ultraviolet ray to form a microparticle-containing viscoelastic layer. The microparticle-containing viscoelastic layer itself has a pressure-sensitive adhesive property and forms a tackified pressure-sensitive adhesive layer. The coating may be directly applied on an adherend or may be once applied on a release paper and then cured. The adhesive layer formed on the release paper can be transferred onto an adherend. The dose of the ultraviolet ray is about 200 to 3000 mJ/cm². The thickness of the adhesive layer at this time is any thickness so far as it is larger than the particle diameter of the microparticles but can be provided in a thickness of about 100 to 3000 µm.

At the application of the microparticle-containing viscoelastic composition on the substrate or the like, it is preferred to thicken it for smooth operation. The thickening can be, for example, regulated by a method of mixing any of various polymer components such as acrylic rubber and a thickening additive, a method of partially polymerizing a monomer component for forming a base polymer (e.g., a monomer component such as a (meth)acrylic acid ester for forming an acrylic polymer), or the like.

Moreover, in the invention, needless to say, various constitutions can be adopted without limitation to the aforementioned best modes for carrying out the invention without deviating from the gist of the invention.

### EXAMPLES

The following will describe the invention in more detail based on Examples but the invention is by no means limited to these Examples.

### Example 1

With a monomer mixture containing 90 parts by weight of 2-ethylhexyl acrylate and 10 parts by weight of acrylic acid mixed therein as monomer components were mixed 0.05 part by weight of trade name "Irgacure 651" (manufactured by Ciba Specialty Chemicals) and 0.05 part by weight of trade name "Irgacure 184" (manufactured by Ciba Specialty Chemicals) as photopolymerization initiators. Then, the whole was irradiated with an ultraviolet ray (UV) until viscosity (BH viscometer, No. 5 rotor, 10 rpm, measuring temperature: 30°C) reached about 15 Pa·s to prepare a partially polymerized composition (syrup). 0.1 part by weight of 1,6-hexanediol diacrylate was added to the syrup. As hollow glass balloons, trade name "CELL-STAR Z-27" (manufactured by Tokai Kogyo Co., Ltd.) was classified to obtain hollow glass balloons having a 90% particle diameter of 18 µm (an average particle diameter of 10 µm). Then, the hollow glass balloons were added so as to account for 35% by volume based on the total volume of the microparticle-containing viscoelastic layer, thereby a microparticle-containing viscoelastic composition being obtained.

The microparticle-containing viscoelastic composition was applied between the release-treatment surfaces of polyethylene terephthalate substrates subjected to release treatment on each one surface so as to have a thickness after drying and curing of 1.0 mm. Namely, a pressure-sensitive adhesive is positioned between the polyethylene terephthalate substrates. Then, the whole was irradiated with an ultraviolet ray (lighting intensity: about 5 mW/cm²) from both sides for 3 minutes with the ultraviolet ray of 900 mJ/cm² to cure the pressure-sensitive adhesive, whereby a pressure-sensitive adhesive sheet having a pressure-sensitive adhesive layer was prepared.

### Example 2

A pressure-sensitive adhesive sheet was prepared in the same manner as in Example 1 except that trade name "EMB-20" (manufactured by Potters Ballotini Co., Ltd.) as solid-core glass balloons was used as it was without classification instead of the hollow glass balloons used in Example 1 to obtain solid-core glass balloons having a 90% particle diameter of 16 µm (average particle diameter of 10 µm) and the balloons were added so as to account for 35% by volume based on the total volume 100% of the microparticle-containing viscoelastic layer.

### Example 3

A pressure-sensitive adhesive sheet was prepared in the same manner as in Example 1 except that the same hollow glass balloons as used in Example 1 were added so as to account for 10% by volume based on the total volume 100% of the microparticle-containing viscoelastic layer.

### Example 4

A pressure-sensitive adhesive sheet was prepared in the same manner as in Example 1 except that the same hollow glass balloons as used in Example 1 were added so as to account for 45% by volume based on the total volume 100% of the microparticle-containing viscoelastic layer.

### Comparative Example 1

A pressure-sensitive adhesive sheet was prepared in the same manner as in Example 1 except that trade name "CELL-STAR Z-27" (manufactured by Tokai Kogyo Co., Ltd.) as hollow glass balloons was used as it was without classification instead of the hollow glass balloons used in Example 1 to obtain hollow glass balloons having a 90% particle diameter of 96 µm (average particle diameter of 60 µm) and the balloons were added so as to account for 35% by volume based on the total volume 100% of the microparticle-containing viscoelastic layer.

### Comparative Example 2

A pressure-sensitive adhesive sheet was prepared in the same manner as in Example 1 except that the hollow glass balloons used in Example 1 were not used.

### Evaluation

### Adhesive force at ordinary temperature

The obtained pressure-sensitive adhesive sheet was cut into pieces having a width of 25 mm and a length of 100 mm. A polyethylene terephthalate release liner on one side of the resulting sample piece was peeled off and a polyethylene terephthalate substrate having a thickness of 50 µm, which was not subjected to release treatment, was attached thereto. A surface of an SUS plate polished with an abrasive paper of grain size No. 280 was wiped with toluene and the sample was attached to the surface by one-way adhesion under pressure with a roller having 5 kg-weight. After standing at 23°C for 30 minutes, force required for peeling-off under the atmosphere of 23°C and 65% R.H. was measured (180° peeling, drawing rate: 50 mm/min).

### Adhesive force at high temperature

The obtained pressure-sensitive adhesive sheet was cut into pieces having a width of 25 mm and a length of 100 mm. A polyethylene terephthalate release liner on one side of the resulting sample piece was peeled off and a polyethylene terephthalate substrate having a thickness of 50 µm, which was not subjected to release treatment, was attached thereto. A surface of an SUS plate polished with an abrasive paper of grain size No. 280 was wiped with toluene and the sample was attached to the surface by one-way adhesion under pressure with a roller having 5 kg-weight. After standing at 23°C for 1 day, it was allowed to stand in a high-temperature room at 80°C for 30 minutes and adhesive force was measured on a tensile tester with a constant-temperature tank (180° peeling, drawing rate: 50 mm/min).

### Shear adhesive force

The pressure-sensitive adhesive sheet was cut into shapes having a size of 25 mm x 25 mm. A surface of an SUS plate polished with an abrasive paper of grain size No. 280 was wiped with toluene. A release liner at one side of the cut sample was peeled off and the sample was attached to the SUS plate by one-way adhesion under pressure with a roller having 5 kg-weight. Then, a release liner at another side was peeled off and the sample was attached to another SUS plate by one-way adhesion under pressure with a roller having 5 kg-weight. After the test piece was allowed to stand at 23°C for 30 minutes, force requiring for peeling in a shear direction under the atmosphere of 23°C and 65% R.H. was measured (drawing rate: 50 mm/min).

**Table 1**

| | Adhesive force at ordinary temperature | Adhesive force at high temperature | Shear adhesive force |
|---|---|---|---|
| | [N/25 mm] | [N/25 mm] | [N/cm²] |
| Example 1 | 47 | 47 | 72 |
| Example 2 | 46 | 45 | 73 |
| Example 3 | 42 | 38 | 56 |
| Example 4 | 37 | 36 | 79 |
| Comparative Example 1 | 47 | 33 | 73 |
| Comparative Example 2 | 38 | 13 | 32 |

From the results of the above Table 1, with regard to the microparticle-containing viscoelastic layers containing microparticles having a 90% particle diameter of 30 µm or less (Examples 1 to 4), it is revealed that all of the adhesive force at ordinary temperature, adhesive force at high temperature, and shear force thereof are remarkably improved in all Examples. In contrast, in the case where a pressure-sensitive adhesive layer containing microparticles having a 90% particle diameter of more than 30 µm is used (Comparative Example 1), it is revealed the adhesive force at ordinary temperature and shear force are improved but the adhesive force at high temperature decreases. Moreover, in the case where microparticles are not incorporated (Comparative Example 2), no good results were obtained in all of the adhesive force at ordinary temperature, adhesive force at high temperature, and shear force.

Accordingly, it was confirmed that the microparticle-containing viscoelastic composition of the invention is excellent in all of adhesive force at ordinary temperature, adhesive force at high temperature, and shear force.

While the invention has been described in detail and with reference to specific embodiments thereof, it will be apparent to one skilled in the art that various changes and modifications can be made therein without departing from the spirit and scope thereof.

The present application is based on Japanese Patent Application No. 2006-065528 filed on March 10, 2006, and the contents are incorporated herein by reference.

Also, all the references are incorporated as a whole.

### INDUSTRIAL APPLICABILITY

According to the microparticle-containing viscoelastic layer containing microparticles of the invention, it is possible to form a pressure-sensitive adhesive layer or substrate in a pressure-sensitive adhesive tape or sheet excellent in adhesion strength at high temperature without deterioration in adhesion strength at ordinary temperature and shear strength. Moreover, the pressure-sensitive adhesive tape or sheet produced using the above-mentioned microparticle-containing viscoelastic layer can exhibit an excellent adhesion strength at high temperature without deterioration in adhesion strength at ordinary temperature and shear strength.

## Claims

1. A microparticle-containing viscoelastic layer containing microparticles, said microparticles having a 90% particle diameter of 30 µm or less.

2. The microparticle-containing viscoelastic layer according to claim 1, wherein the microparticles have an average particle diameter of 20 µm or less.

3. The microparticle-containing viscoelastic layer according to claim 1 or 2, wherein the microparticles are hollow inorganic microparticles.

4. The microparticle-containing viscoelastic layer according to claim 3, wherein the hollow inorganic microparticles are hollow glass balloons.

5. The microparticle-containing viscoelastic layer according to any one of claims 1 to 4, wherein the microparticles have a density of 0.1 to 1.8 g/cm³.

6. The microparticle-containing viscoelastic layer according to any one of claims 1 to 5, which contains 5 to 50% by volume of the microparticles based on the total volume of the microparticle-containing viscoelastic layer.

7. The microparticle-containing viscoelastic layer according to any one of claims 1 to 6, which contains 5 to 40% by volume of cells based on the total volume of the microparticle-containing viscoelastic layer.

8. The microparticle-containing viscoelastic layer according to any one of claims 1 to 7, which contains, as a base polymer, an acrylic polymer containing an alkyl (meth)acrylate as a main monomer component.

9. The microparticle-containing viscoelastic layer according to any one of claims 1 to 8, which is obtained by curing a microparticle-containing viscoelastic composition containing at least microparticles and a monomer with an active energy ray.

10. The microparticle-containing viscoelastic layer according to any one of claims 1 to 9, which is usable as a pressure-sensitive adhesive layer.

11. The microparticle-containing viscoelastic layer according to any one of claims 1 to 9, which is usable as a substrate.

12. A pressure-sensitive adhesive tape or sheet comprising the microparticle-containing viscoelastic layer according to claim 10 as a pressure-sensitive adhesive layer.

13. A pressure-sensitive adhesive tape or sheet comprising the microparticle-containing viscoelastic layer according to claim 11 as a substrate, and a pressure-sensitive adhesive layer provided on at least one surface of the substrate.
